Europäisches Patentamt

European Patent Office

Office européen des brevets

(11) Publication number : **0 515 203 A2**

(12) **EUROPEAN PATENT APPLICATION**

(21) Application number : **92304651.0**

(22) Date of filing : **21.05.92**

(51) Int. Cl.⁵ : **C08L 67/04, // (C08L67/04, 101:00)**

(30) Priority : **24.05.91 US 705574**

(43) Date of publication of application :
**25.11.92 Bulletin 92/48**

(84) Designated Contracting States :
**AT BE CH DE DK ES FR GB GR IT LI LU MC NL PT SE**

(71) Applicant : **NOVACOR CHEMICALS (INTERNATIONAL) S.A.**
**Fribourg, Canton of Fribourg (CH)**

(72) Inventor : **Kharas, Gregory B.**
**7 Crockett Drive**
**Chelmsford, Mass. 01824 (US)**
Inventor : **Nemphos, Speros P.**
**610-D Ridgefield**
**Clinton, Mass. 01510 (US)**

(74) Representative : **Jukes, Herbert Lewis et al**
**Swann, Elt & Company 31 Beaumont Street**
**Oxford OX1 2NP (GB)**

(54) **Polylactide blends.**

㉗ Alloys comprising from about 60 to 98 weight % of a polymer of lactic acid and from 40 to 2 weight % of one or more polymeric extruders and/or organic elastomers have good flexibility and may be formed into useful articles.

EP 0 515 203 A2

The present invention relates to biodegradable polymer alloys. More particularly the present invention relates to polymer alloys comprising a polymer of lactic acid and one or more polymers of the general classes alkylene oxides, vinyl ethers, styrene-butadiene polymers which may be functionalized and which may also be hydrogenated EPDM polymers and polyurethanes.

There are a number of patents relating to co- and homo-polymers of lactic acid or the lactide of lactic acid. Generally these patents relate to the use of such polymers in biodegradable medical applications such as sutures, orthopaedic pins and plates and controlled release delivery systems for drugs. With the current concerns over the problems with land fill and the disposal of waste there has been an increasing awareness that biodegradable polymers might have application in a mumber of non-medical applications such as packaging.

Patent Co-operation Treaty Patent Application WO 90/01521 filed in the name of the Battelle Memorial Institute, published February 22, 1990 discloses that the properties of polylactide polymers may be improved by incorporating into the polymer either residual monomer or lactide oligomers. The patent application also discloses that the plasticized polymers may be further blended with other alloys such as a polymer of ethylene terephthalate or a polymer or copolymer of styrene, ethylene, vinyl chloride, vinyl acetate, alkyl methacrylates, alkyl acrylales and physical mixtures thereof (page 73, line 32 through page 74, line 4). However, the Battelle patent application does not suggest or disclose the polymer alloys of the present invention. Furthermore, none of the rather extensive prior art disclosed in the Battelle Patent Application suggests or discloses the polymer alloys of the present invention.

The present invention seeks to provide flexible polylactide polymer alloys. In a preferred embodiment of the present invention the alloys have a high degree of transparency or are translucent.

The present invention provides a polymer alloy characterised by comprising from 60 to 98 weight % of one or more polymers selected from : :

co- and homo-polymers of D, L, or DL, lactic acid and; from 2 to 40 weight percent of one or more polymers selected from :

(i) co- and homo-polymers of one or more $C_{2-6}$ alkylene oxides;

(ii) co- and homo-polymers of a $C_{2-6}$ alkylene ether of a $C_{2-10}$ alkanol;

(iii) copolymers comprising from 80 to 20 weight % of one or more $C_{8-12}$ vinyl aromatic monomers which are unsubstituted or substitute by a $C_{1-4}$ alkyl radical, from 20 to 80 weight % of one or more $C_{4-6}$ conjugated diolefins and from 0 to 5 weight % of one or more functional monomers selected from :        :

(a) $C_{3-6}$ ethylenically unsaturated carboxylic acids;

(b) $C_{4-6}$ ethylenically unsaturated dicarboxylic acids and anhydrides of such acids;

(c) amides of $C_{3-6}$ ethylenically unsaturated carboxylic acids; and

(d) $C_{3-6}$ ethylenically unsaturated aldehydes; which polymers are unhydrogenated or hydrogenated to not less than 80%;

(iv) polymers comprising at least two $C_{2-3}$ alpha olefins;

(v) terpolymers comprising from 95 to 99.5 weight % of at least two alpha $C_{2-3}$ olefins and from 5 to 0.5 weight % of a non-conjugated diolefin;

(vi) synthetic co- and homo-polymers comprising one or more monomers selected from :

$C_{4-6}$ conjugated diolefins which are unsubstituted or substituted by a halogen atom;

(vii) copolymers comprising:

(a) from 60 to 99 weight % of one or more monomers selected from :

$C_{4-6}$ conjugated diolefins;

(b) from 1 to 40 weight % of one or more monomers selected from :

$C_{2-4}$ alkenyl nitriles; and

(c) from 0 to 5 weight % of one or more monomers selected from :

(1) $C_{3-6}$ ethylenically unsaturated carboxylic acids;

(2) $C_{4-6}$ ethylenically unsaturated dicarboxylic acids and anhydrides of such acids;

(3) amides of $C_{3-6}$ ethylenically unsaturated carboxylic acids; and

(4) $C_{3-6}$ ethylenically unsaturated aldehydes;

(viii) copolymers of isoprene and isobutylene in a molar ration from 1:99 to 3:97 which copolymers are unhalogenated or halogenated with up to 3 weight % of chlorine or bromine; and

(ix) a polyurethane thermoplastic elastomer.

As used in this specification the phrase homopolymers of D, L, or DL lactic acid is intended to include polymers prepared from lactic acid per se and polymers prepared from the various lactide optical isomers.

Lactides are dimers of lactic acid and may have a D, L, or a DL, (or meso) configuration. The polymers of the D or L configuration may have improved thermal and physical properties over the polymers prepared from the DL or a mixture of isomers. The polymers may have a molecular weight greater than about 60,000, preferably greater than 80,000. However, as noted in the Battelle patent application the polymers tend to be stiff and brittle. Therefore, it is desirable to find ways to improve the properties of the polymers.

Lactide polymers may be alloyed or blended with the above noted polymers. The ratio of lactide polymer to alloy polymer may range from 60:40 to about 98:2, preferably from 70:30 to 95:5 most preferably from 75:25 to 90:10

As used in this specification the term polymer when used in association with polymers other than those of lactic acid means a polymer having a degree of polymerization (DP) of at least 10.

The lactide polymer may be alloyed with a polymeric $C_{2-6}$, preferably $C_{2-4}$ alkylene oxide (also referred to as alkylene glycols) such as polyethylene oxide or polypropylene oxide. The polyalkylene oxide may have a molecular weight from about 8,000 up to about 100,000, preferably from about 8,000 to about 60,000, most preferably from about 10,000 to 40,000.

The lactide polymer may be alloyed with a polymeric $C_{2-6}$ alkylene ether of a $C_{2-10}$ alkanol. The ether may have a molecular weight from about 50,000 to about 150,000, preferably from about 80,000 to 120,000. An alkylene ether is vinyl alcohol; although other higher homologues may be used.

The lactide polymer may be alloyed with a copolymer of a vinyl aromatic monomer and a conjugated diene and optionally one or more functional monomers. Such a polymer may be a random polymer, a linear block, or a radial block polymer. The vinyl aromatic-conjugated diene polymer may comprise from 80 to 20 weight % of one or more $C_{8-12}$ vinyl aromatic monomers which are unsubstituted or substitute by a $C_{1-4}$ alkyl radical and from 20 to 80 weight % of one or more $C_{4-6}$ conjugated diolefins and from 0 to 5 weight % of one or more functional monomers selected from :

(a) $C_{3-6}$ ethylenically unsaturated carboxylic acids;

(b) $C_{4-6}$ ethylenically unsaturated dicarboxylic acids and anhydrides of such acids;

(c) amides of $C_{3-6}$ ethylenically unsaturated carboxylic acids; and

(d) $C_{3-6}$ ethylenically unsaturated aldehydes which polymers are unhydrogenated or hydrogenated to not less than 80%.

Preferably the polymer of vinyl aromatic monomer and conjugated diolefin comprises: from 60 to 40 weight % of one or more $C_{8-12}$ vinyl aromatic monomers which are unsubstituted or substitute by a $C_{1-4}$ alkyl radical and from 40 to 60 weight % of one or more $C_{4-6}$ conjugated diolefins and from 0 to 3 weight % of one or more functional monomers selected from :

(a) $C_{3-6}$ ethylenically unsaturated carboxylic acids,

(b) $C_{4-6}$ ethylenically unsaturated dicarboxylic acids and anhydrides of such acids;

(c) amides of $C_{3-6}$ ethylenically unsaturated carboxylic acids; and

(d) $C_{3-6}$ ethylenically unsaturated aldehydes.

The polymer of vinyl aromatic monomer and conjugated diolefin need not comprise any functional monomer. That is it may comprise only vinyl aromatic monomer and conjugated diolefin.

The vinyl aromatic and conjugated diene copolymer may be unhydrogenated or it may be hydrogenated to at least 80, preferably 90 most preferably greater than 95 weight %. An hydrogenated vinyl aromatic and conjugated diene polymer may be a linear or radial, preferably linear, block copolymer comprising from 40 to 60 weight % of vinyl aromatic monomer, from 60 to 40 weight % of conjugated diolefin and from 0.5 to 3 weight % of an anhydride of a $C_{4-6}$ ethylenically unsaturated carboxylic acid which polymer has been hydrogenated to at least 90 weight %.

Some vinyl aromatic monomers are styrene, alpha methyl styrene, and tertiary butyl styrene. A particular vinyl aromatic monomer is styrene. Some conjugated diolefin monomers are 1,4 butadiene, and isoprene.

The lactide polymer may be alloyed with a polymer comprising at least two $C_{2-3}$ alpha olefins. Some alpha olefins are $C_{2-3}$ and alpha olefins. Such polymers may have an ethylene: propylene weight ratio from about 75:25 to about 50:50.

The lactide polymer may be alloyed with a terpolymer comprising from 95 to 99.5 weight % of at least two alpha $C_{2-3}$ olefins and from 5 to 0.5 weight % of one or more $C_{5-12}$ non-conjugated diolefin. Preferably the terpolymer may comprise from 97 to 99.5 weight % of at least two alpha $C_{2-3}$ olefins and from 3 to 0.5 weight % of a non-conjugated diolefin. Some alpha olefins are ethylene and propylene. The weight ratio of ethylene to propylene may be from 75:25 to 50:50. Some $C_{5-12}$ non-conjugated diene monomers are 5-ethylidene-2-norbornene, 1,4-hexadiene, and dicyclopentadiene.

The lactide polymer may be alloyed with a synthetic homo- or copolymer comprising one or more monomers selected from :
of $C_{4-6}$ conjugated diolefins which are unsubstituted or substituted by a halogen atom. Some $C_{4-6}$ conjugated

diolefins have been listed above. Some polymers are polybutadiene and polychloroperne. The polymer of the $C_{4-6}$ conjugated diolefin may be stero specific, that is it may be in a trans- or cis- configuration or have a pendent vinyl group. The polymers may have a medium cis content of at least about 55 %. Such polymers are commercially available under the trademarks TAKTENE 550® available from Polysar Rubber Corporation and DIENE 55® available from the Firestone Company. The polymers may have a high cis content of more than 90, preferably more than about 95 %. Such polymers are available from Polysar Rubber Corporation under the trademark TAKTENE®.

The lactide polymer may be alloyed with one or more copolymers comprising:

(a) from 60 to 99 weight % of one or more monomers selected from :

$C_{4-6}$ conjugated diolefins;

(b) from 1 to 40 weight % of one or more monomers selected from :

$C_{2-4}$ alkenyl nitriles; and

(c) from 0 to 5 weight % of one or more monomers selected from :

(1) $C_{3-6}$ ethylenically unsaturated carboxylic acids;

(2) $C_{4-6}$ ethylenically unsaturated dicarboxylic acids and anhydrides of such acids;

(3) amides of $C_{3-6}$ ethylenically unsaturated carboxylic acids; and

(4) $C_{3-6}$ ethylenically unsaturated aldehydes;

Such polymers are typically called nitrile rubbers or carboxylated nitrile rubbers. Preferably the polymers comprise from 60 to 95 % of one or more $C_{4-6}$ conjugated diolefins, form 40 to 5 % of one or more $C_{1-4}$ alkenyl nitriles. The polymer need not contain a functional group such as a carboxylic acid, an anhydride of a carboxylic acid, or an amide of a carboxylic acid. However, if one or more of such functional groups are present then they are preferably present in an amount from about 0.5 to 3 weight % and typically the amount of conjugated diolefin would decrease correspondingly. Some functional monomers have been discussed above. Some $C_{4-6}$ conjugated diolefins are those discussed above and chloroprene. Some $C_{2-4}$ alkenyl nitriles are acrylonitrile and methacrylonitrile.

The lactide polymer may be alloyed with copolymers of isoprene and isobutylene in a molar ratio from 1:99 to 3:97. Such polymers may be unhalogenated or halogenated with up to about 3 weight % of chlorine or bromine. Such polymers are commercially available and are commonly referred to as butyl rubbers.

The lactide polymer may be alloyed with a polyurethane thermoplastic elastomer. The polyurethane may be a polyether urethane or a polyester urethane. A preferred polyurethane is a polyester urethane most preferably based on adipic acid or caprolactone. The polyester urethane may have a molecular weight from about 10,000 to about 150,000.

The alloys of the present invention may be prepared by conventional processing techniques. That is the polymeric components may be blended in a tumble blender suitable weight ratio. The dry blend may then be extruded using conventional techniques known to those skilled in the art. The dwell time, temperature and shear rate in the extruder are selected so that the alloy and particularly the lactide polymer will not under go significant degradation during the extrusion process. Generally the temperatures in the extruder should not exceed 20, preferably less than 10 degrees above the melting temperature of the lactide polymer. For example, in a single screw extruder having a D to L ratio of 1:24 the operating temperature should not exceed about 200 degrees Centigrade and the operating rate should be from about 50 to 150, preferably from about 75 to 120 RPMs.

Of course, if a suitable common solvent can be found the alloy could be prepared by solution blending. However, the requirement to use and remove solvents which are typically organic is less desirable due to environmental regulation.

The alloys may be prepared by reactive blending. That is the lactide may be used in monomer or partially or fully polymerized form. The resulting mass is then reacted preferably in the presence of a catalyst at atmospheric pressure at temperatures up to about 10 degrees above the melting to polylactide homopolymer.

A catalyst may comprise metallic ester(s) of $C_{2-10}$, preferably $C_{6-10}$ carboxylic acids. Some metals are tin and zinc.

The catalyst concentration may be in the range from 0.01 to about 1, preferably from 0.01 to 0.3 weight % of the reactive mixture. The reaction time will vary depending on the type of reactor, mixing conditions and heat transfer ability of the reactor. Typically the residence times for the reaction/mixing will range from about 1 to 60 minutes.

The resulting base alloy may then be further compounded with suitable processing aids and other additives e.g. antioxidants, flame retardants and fillers. Typically these additives will not form more than about 50, preferably less than 25, most preferably less than about 15 weight % of the polymer alloy.

The resulting alloy may be converted into useful products using known techniques such as blow, injection and compression molding, and extrusion, and blown extrusion for thin films and relatively thin sheets. Extrusion techniques followed by thermoforming may be used to produce various products. The alloy may be injection or compression molded.

The alloy may be formed into thin sheets or films useful in packaging applications such as bags and blister packaging.

As noted in the specification the alloys may have a high degree of translucence or may even be transparent while at the same time having good flexibility.

The present invention will now be illustrated by the following non-limiting examples in which unless otherwise specified parts are parts by weight and % is weight %. In the table the ratio of lactide polymer (BP) to alloy polymer (X) is a weight ratio.

### Example 1

A sample of polylactide polymer (L polylactide) was charged to a Brabender mixer under a 10 kg ram weight. The bowl of the Brabender was heated to 180 degrees C. The mixing continued until a constant torque. Then a sample of alloy polymer was added to the Brabender and the torque initially fell then mixing continued until a constant torque was obtained. The sample was allowed to cool to about 20 degrees C and the sample was then removed from the Brabender. The resulting sample was then compression molded as a thin sheet. The exudence of the alloy (e.g. the tendency of the soft phase to migrate to the surface of the alloy), transparency, flexibility and crazing of the resulting sheet were then subjectively measured. The results and the scale for measuring results are set forth in Table 1.

## Table 1

### Copolymers of Polylactide (BP) for Improving Flexibility

| COMPONENT (X) | BP/X RATIO | TRANSPARENCY | EXUDENCE | FLEXIBILITY | CRAZING |
|---|---|---|---|---|---|
| Polyethylene Glycol MW 8,000 | 70/30 80/20 90/10 | 5 5 5 | 5 5 5 | 5 4.5 4 | 4 5 5 |
| Polyethylene Glycol MW 3,400 | 70/30 | >5 | 3 | 5 | 5 |
| Polyethylene Oxide MW 100,000 | 70/30 80/20 90/10 | 5 5 5 | 5 5 5 | 5 5 4 | 5 5 4 |
| Polyethylene Vinyl Alcohol 56% Vinyl Alc. | 70/30 | 1 | 5 | 1 | - |
| EPDM Ethylene 70% Diene 4% | 70/30 80/20 90/10 | 5 5 5 | 5 5 5 | 5 4.5 4 | 2.5 3 3.5 |
| Styrene Butadiene Rubber | 70/30 80/20 90/10 | 5 4.5 4 | 5 5 5 | 5 5 5 | 4 4 4 |
| Polyethylene Glycol MW 18,500 | 70/30 80/20 90/10 | 5 5 5 | >5 >5 >5 | 5 4.5 4.5 | 5 5 5 |
| Polyethylene Glycol MW 8,000 | 80/20 | >5 | >5 | 5 | 5 |

EP 0 515 203 A2

| COMPONENT (X) | BP/X RATIO | TRANSPARENCY | EXUDENCE | FLEXIBILITY | CRAZING |
|---|---|---|---|---|---|
| Polyethylene Glycol MW 3,400 | 80/20 | >5 | 4 | 5 | 5 |
| Polyethylene Glycol MW 18,500 | 80/20 | >5 | >5 | 5 | 5 |
| Polyethylene Oxide MW 100,000 | 80/20 | 5 | >5 | 5 | 5 |
| Polyeth. Vinyl Acetate 60% Ethylene | 80/20 | 5 | 5 | 5 | 4 |
| Polyeth. Vinyl Alcohol 56% Vinyl Alc. | 80/20 | 3 | 5 | 2 | - |
| Polyurethane * | 80/20 | 3 | 5 | 5 | 5 |

SCALE:

Transparency: 5 (highly transparent) To: 1 (highly opaque
Exudence: 5 (no exudence) To: 1 (high exudence)
Flexibility: 5 (highly flexible) To: 1 (highly brittle)
Crazing: 5 (no crazing) To: 1 (highly prone to crazing)

\* Sold under the Trademark PELLETHANE®.

The results show that the alloys of the present invention have good flexibility and may be compounded to obtain high translucence or even transparent sheets or films.

In the present application's disclosure of the present invention, any numerical value includes the precise value and any value "about" or "essentially" or "substantially" the same as the precise value. The wording of the appended claims and abstract is incorporated into the present description.

## Claims

1. A polymer alloy characterised by comprising from 60 to 98 weight % of one or more polymers selected from :

    co- and homo-polymers of D, L, or DL, lactic acid and; from 2 to 40 weight percent of one or more polymers selected from :

    (i) co- and homo-polymers of one or more $C_{2-6}$ alkylene oxides;

    (ii) co- and homo-polymers of a $C_{2-6}$ alkylene ether of a $C_{2-10}$ alkanol;

    (iii) copolymers comprising from 80 to 20 weight % of one or more $C_{8-12}$ vinyl aromatic monomers which are unsubstituted or substitute by a $C_{1-4}$ alkyl radical, from 20 to 80 weight % of one or more $C_{4-6}$ conjugated diolefins and from 0 to 5 weight % of one or more functional monomers selected from :

        (a) $C_{3-6}$ ethylenically unsaturated carboxylic acids;

        (b) $C_{4-6}$ ethylenically unsaturated dicarboxylic acids and anhydrides of such acids;

        (c) amides of $C_{3-6}$ ethylenically unsaturated carboxylic acids; and

        (d) $C_{3-6}$ ethylenically unsaturated aldehydes; which polymers are unhydrogenated or hydrogenated to not less than 80 %;

    (iv) polymers comprising at least two $C_{2-3}$ alpha olefins;

    (v) terpolymers comprising from 95 to 99.5 weight % of at least two alpha $C_{2-3}$ olefins and from 5 to 0.5 weight % of a non-conjugated diolefin;

    (vi) synthetic co- and homo-polymers comprising one or more monomers selected from :

        $C_{4-6}$ conjugated diolefins which are unsubstituted or substituted by a halogen atom;

    (vii) copolymers comprising:

        (a) from 60 to 99 weight %o of one or more monomers selected from :

            $C_{4-6}$ conjugated diolefins;

        (b) from 1 to 40 weight % of one or more monomers selected from :

            $C_{2-4}$ alkenyl nitriles; and

        (c) from 0 to 5 weight % of one or more monomers selected from :

            (1) $C_{3-6}$ ethylenically unsaturated carboxylic acids;

            (2) $C_{4-6}$ ethylenically unsaturated dicarboxylic acids and anhydrides of such acids;

            (3) amides of $C_{3-6}$ ethylenically unsaturated carboxylic acids; and

            (4) $C_{3-6}$ ethylenically unsaturated aldehydes;

    (viii) copolymers of isoprene and isobutylene in a molar ratio from 1:99 to 3:97 which copolymers are unhalogenated or halogenated with up to 3 weight % of chlorine or bromine; and

    (ix) a polyurethane thermoplastic elastomer.

2. The polymer alloy according to claim 1, characterised by said polymer of lactic acid has a molecular weight of at least 60,000.

3. The polymer alloy according to claim 2, characterised by said polymer of lactic acid is present in an amount from 70 to 95 weight %.

4. The polymer alloy according to claim 3, characterised by said polymer of a $C_{2-6}$ alkylene oxide is selected from polyethylene oxide and polypropylene oxide.

5. The polymer alloy according to claim 4, characterised by said poly alkylene oxide has a molecular weight from 8,000 to 100,000.

6. The polymer alloy according to claim 5, characterised by said polymer of a $C_{2-6}$ alkylene oxide has a molecular weight from 8,000 to 60,000.

7. The polymer alloy according to claim 3, characterised by said $C_{2-6}$ alkylene ether of a $C_{2-10}$ alkanol is vinyl alcohol.

8

8. The polymer alloy according to claim 3, characterised by said polymer of vinyl aromatic monomer and conjugated diolefin monomer comprises: from 60 to 40 weight % of one or more $C_{8-12}$ vinyl aromatic monomers which are unsubstituted or substitute by a $C_{1-4}$ alkyl radical and from 40 to 60 weight % of one or more $C_{4-6}$ conjugated diolefins and from 0 to 3 weight % of one or more functional monomers selected from :

(a) $C_{3-6}$ ethylenically unsaturated carboxylic acids;

(b) $C_{4-6}$ ethylenically unsaturated dicarboxylic acids and anhydrides of such acids;

(c) amides of $C_{3-6}$ ethylenically unsaturated carboxylic acids; and

(d) $C_{3-6}$ ethylenically unsaturated aldehydes.

9. The polymer alloy according to claim 8, characterised by said vinyl aromatic monomer is selected from : styrene, alpha methyl styrene and tertiary butyl styrene.

10. The polymer alloy according to claim 9, characterised by said conjugated diolefin is selected from : 1,4 butadiene and isoprene.

11. The polymer alloy according to claim 10, characterised by said polymer of vinyl aromatic monomer and conjugated diolefin polymer comprises only vinyl aromatic monomer and conjugated diolefin.

12. The polymer alloy according to claim 10, characterised by said polymer of vinyl aromatic monomer and conjugated diolefin is a linear or radial block polymer comprising from 40 to 60 weight % of vinyl aromatic monomer, from 60 to 40 weight % of conjugated diolefin and from 0.5 to 3 weight % of an anhydride of a $C_{4-6}$ ethylenically unsaturated carboxylic acid which polymer has been hydrogenated to at least 90 weight %.

13. The polymer alloy according to claim 3, characterised by said polymer of comprising at least two $C_{2-3}$ alpha olefins is a copolymer of ethylene and propylene in a weight ratio from 50:50 to 75:25.

14. The polymer alloy according to claim 3, characterised by said terpolymers comprise from 97 to 99.5 weight % of ethylene and propylene in a weight ratio from 50:50 to 75:25 and from 3 to 0.5 weight % of a non-conjugated diolefin monomer.

15. The polymer alloy according to claim 14, characterised by said non-conjugated diolefin monomer is selected from : of 5-ethylidene-2-norbornene, 1,4-hexadiene and dicyclopentadiene.

16. The polymer alloy according to claim 3, characterised by said co- and homo-polymers of $C_{4-6}$ conjugated diolefins are co- and homo-polymers of one or more monomers selected from : butadiene, isoprene and chloroprene.

17. The polymer alloy according to claim 3, characterised by said copolymer of a conjugated diolefin and an alkenyl nitrile comprises:

(a) from 60 to 95 weight % of one or more monomers selected from : butadiene, isoprene and chloroprene;

(b) from 40 to 5 weight % of one or more monomers selected from : acrylonitrile and methacrylonitrile.

18. The polymer alloy according to claim 3, characterised by said copolymer of a conjugated diolefin and an alkenyl nitrile comprises:

(a) from 57 to 94.5 weight % of one or more monomers selected from : butadiene, isoprene and chloroprene;

(b) from 40 to 5 weight % of one or more monomers selected from : acrylonitrile and methacrylonitrile; and

(c) from 0.5 to 3 weight % of one or more functional monomers selected from:

(i) $C_{3-6}$ ethylenically unsaturated carboxylic acids,

(ii) $C_{4-6}$ ethylenically unsaturated dicarboxylic acids and anhydrides of such acids;

(iii) amides of $C_{3-6}$ ethylenically unsaturated carboxylic acids; and

(iv) $C_{3-6}$ ethylenically unsaturated aldehydes.

19. The polymer alloy according to claim 3, characterised by said copolymer comprising isoprene and isobutylene is unhalogenated.

20. The polymer alloy according to claim 3, characterised by said urethane thermoplastic elastomer is a polyester urethane having a molecular weight from 10,000 to 150,000 based on adipic acid or caprolactone.

21. A blow, injection or compression molded, extruded or thermoformed article having a composition characterised by comprising from 60 to 98 weight % of one or more polymers selected from :
co- and homo-polymers of D, L, or DL, lactic acid and; from 2 to 40 weight percent of one or more polymers selected from :
(i) co- and homo-polymers of one or more $C_{2-6}$ alkylene oxides;
(ii) a $C_{2-6}$ alkylene ether of a $C_{2-10}$ alkanol;
(iii) copolymers comprising from 80 to 20 weight % of one or more $C_{8-12}$ vinyl aromatic monomers which are unsubstituted or substitute by a $C_{1-4}$ alkyl radical, from 20 to 80 weight % of one or more $C_{4-6}$ conjugated diolefins and from 0 to 5 weight % of one or more functional monomers selected from :
(a) $C_{3-6}$ ethylenically unsaturated carboxylic acids;
(b) $C_{4-6}$ ethylenically unsaturated dicarboxylic acids and anhydrides of such acids;
(c) amides of $C_{3-6}$ ethylenically unsaturated carboxylic acids; and
(d) $C_{3-6}$ ethylenically unsaturated aldehydes; which polymers are unhydrogenated or hydrogenated to not less than 80%;
(iv) polymers comprising at least two $C_{2-3}$ alpha olefins;
(v) terpolymers comprising from 95 to 99.5 weight % of at least two alpha $C_{2-3}$ olefins and from 5 to 0.5 weight % of a non-conjugated diolefin;
(vi) synthetic co- and homo-polymers comprising one or more monomers selected from :
$C_{4-6}$ conjugated diolefins which are unsubstituted or substituted by a halogen atom;
(vii) copolymers comprising:
(a) from 60 to 99 weight % of one or more monomers selected from :
$C_{4-6}$ conjugated diolefins;
(b) from 1 to 40 weight % of one or more monomers selected from :
$C_{2-4}$ alkenyl nitriles; and
(c) from 0 to 5 weight % of one or more monomers selected from :
(1) $C_{3-6}$ ethylenically unsaturated carboxylic acids;
(2) $C_{4-6}$ ethylenically unsaturated dicarboxylic acids and anhydrides of such acids;
(3) amides of $C_{3-6}$ ethylenically unsaturated carboxylic acids; and
(4) $C_{3-6}$ ethylenically unsaturated aldehydes;
(viii) copolymers of isoprene and isobutylene in a molar ratio from 1:99 to 3:97 which copolymers are unhalogenaed or halogenated with up to 3 weight % of chlorine or bromine; and
(ix) a polyurethane thermoplastic elastomer

22. The blow, injection or compression molded, extruded or thermoformed article according to claim 21, characterised by said polymer of lactic acid has a molecular weight of at least 60,000.

23. The blow, injection or compression molded, extruded or thermoformed article according to claim 22, characterised by said polymer of lactic acid is present in an amount from 70 to 95 weight %.

24. The blow, injection or compression molded, extruded or thermoformed article according to claim 23, characterised by said polymer of a $C_{2-6}$ alkylene oxide is selected from :
polyethylene oxide and polypropylene oxide.

25. The blow, injection or compression molded, extruded or thermoformed article according to claim 24, characterised by said poly alkylene oxide has a molecular weight from 8,000 to 100,000.

26. The blow, injection or compression molded, extruded or thermoformed article according to claim 25, characterised by said polymer of a $C_{2-6}$ alkylene oxide has a molecular weight from 8,000 to 60,000.

27. The blow, injection or compression molded, extruded or thermoformed article according to claim 23, characterised by said $C_{2-6}$ alkylene ether of a $C_{2-10}$ alkanol is vinyl alcohol.

28. The blow, injection compression molded, extruded or thermoformed article according to claim 23, characterised by said polymer of vinyl aromatic monomer and conjugated diolefin monomer comprises: from 60 to 40 weight % of one or more $C_{8-12}$ vinyl aromatic monomers which are unsubstituted or substitute by a $C_{1-4}$ alkyl radical and from 40 to 60 weight % of one or more $C_{4-6}$ conjugated diolefins and from 0 to 3 weight % of one or more functional monomers selected from :

(a) $C_{3-6}$ ethylenically unsaturated carboxylic acids;

(b) $C_{4-6}$ ethylenically unsaturated dicarboxylic acids and anhydrides of such acids;

(c) amides of $C_{3-6}$ ethylenically unsaturated carboxylic acids; and

(d) $C_{3-6}$ ethylenically unsaturated aldehydes.

29. The blow, injection or compression molded, extruded or thermoformed article according to claim 28, characterised by said vinyl aromatic monomer is selected from :

styrene, alpha methyl styrene and tertiary butyl styrene.

30. The blow, injection or compression molded, extruded or thermoformed article according to claim 29, characterised by said conjugated diolefin is selected from :

1,4 butadiene and isoprene.

31. The blow, injection or compression molded, extrudes or thermoformed article according to claim 30, characterised by said polymer of vinyl aromatic monomer and conjugated diolefin polymer comprises only vinyl aromatic monomer and conjugated diolefin.

32. The blow, injection or compression molded, extruded or thermoformed article to claim 30, characterised by said polymer of vinyl aromatic monomer and conjugated diolefin is a linear or radial block polymer comprising from 40 to 60 weight % of vinyl aromatic monomer, from 60 to 40 weight % of conjugated diolefin and from 0.5 to 3 weight % of an anhydride of a $C_{4-6}$ ethylenically unsaturated carboxylic acid which polymer has been hydrogenated to at least 90 weight %.

33. The blow, injection or compression molded, extruded or thermoformed article to claim 23, characterised by said polymer comprising at least two $C_{2-3}$ alpha olefins is a copolymer of ethylene and propylene in a weight ratio from 50:50 to 75:25.

34. The blow, injection or compression molded, extruded or thermoformed article according to claim 23, characterised by said terpolymers comprise from 97 to 99.5 weight % of ethylene and propylene in a weight ratio from 50:50 to 75:25 and from 3 to 0.5 weight % of a non-conjugated diolefin monomer.

35. The blow, injection or compression molded, extruded or thermoformed article according to claim 34, characterised by said non-conjugated diolefin monomer is selected from :

of 5-ethylidene-2-norbornene, 1,4-hexadiene and dicyclopentadiene.

36. The blow, injection or compression molded, extruded or thermoformed article according to claim 23, characterised by said co- and homo-polymers of $C_{4-6}$ conjugated diolefins are co- and homo-polymers of one or more monomers selected from :

butadiene, isoprene and chloroprene.

37. The blow, injection or compression molded, extruded or thermoformed article according to claim 23, characterised by said copolymer of a conjugated diolefin and an alkenyl nitrile comprises:

(a) from 60 to 95 weight % of one or more monomers selected from :

butadiene, isoprene and chloroprene;

(b) from 40 to 5 weight % of one or more monomers selected from :

acrylonitrile and methacrylonitrile.

38. The blow, injection or compression molded, extruded or thermoformed article according to claim 23, characterised by said copolymer of a conjugated diolefin and an alkenyl nitrile comprises:

(a) from 57 to 94.5 weight % of one or more monomers selected from :

butadiene, isoprene and chloroprene;

(b) from 40 to 5 weight % of one or more monomers selected from :

acrylonitrile and methacrylonitrile; and

(c) from 0.5 to 3 weight % of one or more functional monomers selected from:

(i) $C_{3-6}$ ethylenically unsaturated carboxylic acids,

(ii) $C_{4-6}$ ethylenically unsaturated dicarboxylic acids and anhydrides of such acids;

(iii) amides of $C_{3-6}$ ethylenically unsaturated carboxylic acids; and

(iv) $C_{3-6}$ ethylenically unsaturated aldehydes.

39. The blow, injection or compression molded, extruded or thermoformed article according to claim 23, characterised by said copolymer comprising isoprene and isobutylene is unhalogenated.

40. The blow, injection or compression molded, extruded or thermoformed article according to claim 23, characterised by said urethane thermoplastic elastomer is a polyester urethane having a molecular weight from 10,000 to 150,000 based on adipic acid or caprolactone.

41. The article of any one of claims 21 to 40, characterised by being a sheet, film, bag, or blister packaging.

42. The article of any one of claims 21 to 41, characterised by being translucent or transparent.

43. The alloy of any one of claims 1 to 20, characterised by being flexible.

44. The alloy of any one of claims 1 to 20, and 43, characterised by being translucent or transparent.